# EUROPEAN PATENT APPLICATION

(11) **EP 1 725 003 A1**
(43) Date of publication of application: **22.11.2006**
(21) Application number: 05104319.8
(22) Date of filing: 20.05.2005
(51) Int. Cl.: H04M 1/725

(54) **Wireless accessory requesting information from handheld device**

(71) Applicant: Research In Motion Limited, Waterloo, Ontario N2L 3W8 (CA)
(72) Inventor: Rose, Scott, N2K 4H5, Waterloo (CA); Leung, Chris Kwok, L4S 1T6, Richmond Hill, (CA); Vuong, Thanh Vinh, N2E 4B9, Kitchener, (CA); Fyke, Steven Henry, N2J 4T3, Waterloo, (CA)
(74) Representative: Rickard, David John

(57) **Abstract**

A handheld device (100) receives a request for information from a wireless accessory (200) over a wireless communication link (11). The handheld device (100) retrieves the information or a portion thereof and transmits all or a portion of the retrieved information to the wireless accessory (200) over the wireless communication link (11).

## Description

A wireless accessory may be paired with a handheld device to provide a user with at least a subset of the functionality provided by the personal handheld device.

In one example, the handheld device is a cellular telephone, able to be involved in telephone and data communication sessions, and the wireless accessory is a wireless headset or a wireless handset. The wireless accessory may serve the user as at least a voice input/output device ― functionality that is substantially a copy of the voice functionality of the cellular telephone itself. The wireless accessory may connect to the cellular telephone using a proprietary communication protocol or using an industry standard communication protocol, for example Bluetooth®.

A handheld device receives a request for information from a wireless accessory over a wireless communication link. The request for information is sent in response to user input at the wireless accessory. The handheld device retrieves the information or a portion thereof and transmits all or a portion of the retrieved information to the wireless accessory over the wireless communication link.

For example, retrieving the information or a portion thereof may include searching entries managed by an address book application module, searching audio files managed by an audio player application module, searching records related to calendar events managed by a calendar application module, or obtaining details about one or more entities that were recently involved in telephone and/or data communication sessions involving the handheld device.

The information transmitted to the wireless accessory may include, for example, a name of a person, a name of a company, an e-mail address, an instant messaging name, or a telephone number.

The wireless communication between the handheld device and the wireless accessory may be according to a Bluetooth®, ZigBee™ or ultra wideband standard, or any other suitable short-range wireless communication standard.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

FIG. 1 is a simplified illustration of an exemplary communication system including a handheld device and a wireless accessory, according to some embodiments of the invention;

FIG. 2 is a simplified block diagram of an exemplary handheld device, according to some embodiments of the invention;

FIG. 3 is a simplified block diagram of an exemplary wireless accessory, according to some embodiments of the invention;

FIG. 4 is a flowchart of an exemplary method to be implemented in a handheld device, according to some embodiments of the invention; and

FIGs. 5 - 10 are simplified illustrations of screens displayed on a display of a wireless accessory, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DETAILED DESCRIPTION OF PREFERRED EMBODIMENTS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

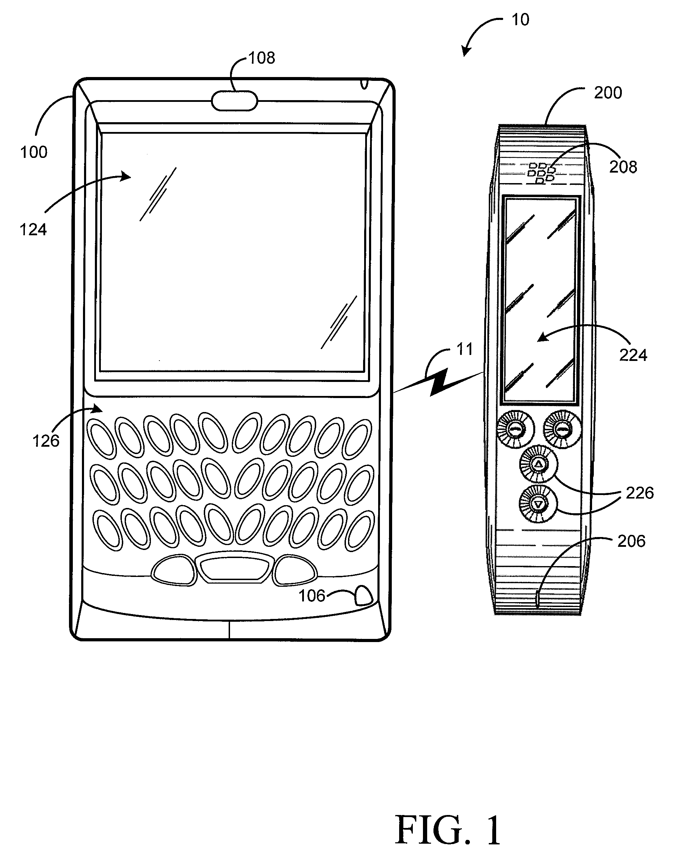

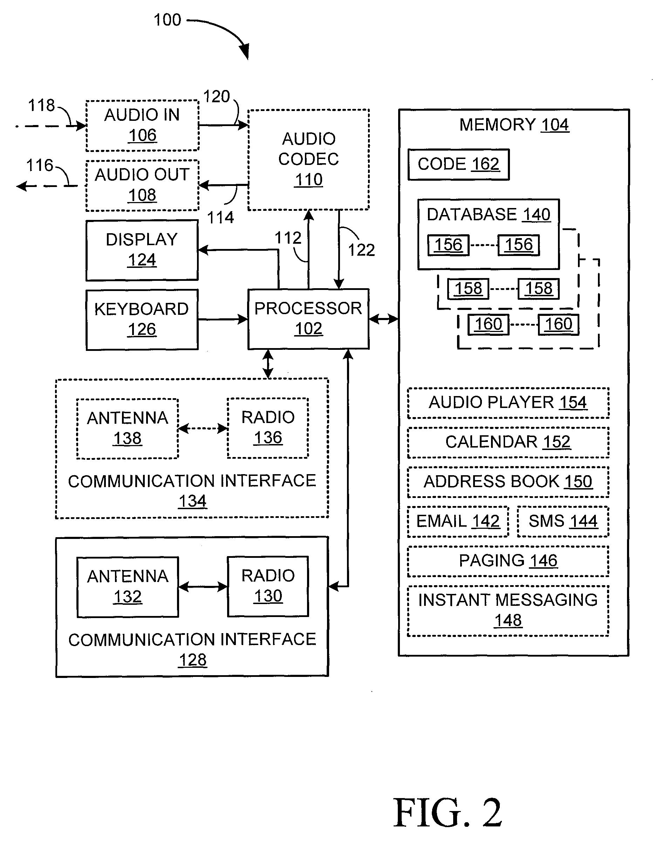

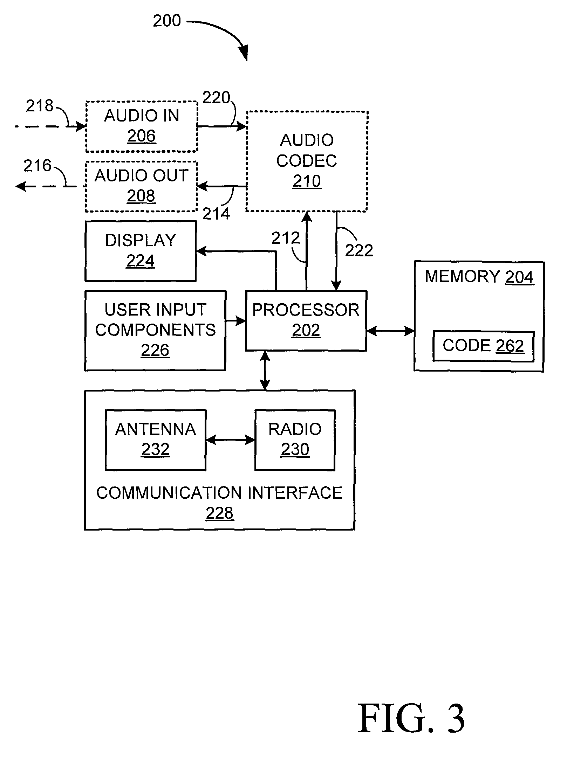

Reference is made now to Figures 1, 2 and 3. Figure 1 is a simplified illustration of an exemplary wireless communication system 10 including an exemplary handheld device 100 and an exemplary wireless accessory 200, according to some embodiments of the invention. Figure 2 is a simplified block diagram of handheld device 100, according to some embodiments of the invention, and figure 3 is a simplified block diagram of wireless accessory 200, according to some embodiments of the invention. For clarity, some components and features of handheld device 100 and wireless accessory 200 are not shown in figures 1, 2 and 3 and are not described explicitly below.

A non-exhaustive list of examples for handheld device 100 includes a cellular phone, a smart phone, a personal digital assistant (PDA), an electronic mail (Email) client, a gaming device, a laptop computer, a notebook computer, a wireless terminal, an MP3 (Moving Picture Experts Group Layer-3 Audio) player, and any other suitable mobile apparatus. A non-exhaustive list of examples for wireless accessory 200 includes a wireless headset, a wireless handset, and any other suitable wireless accessory.

Handheld device 100 includes a processor 102 and a memory 104 coupled to processor 102. Handheld device 100 may optionally include an audio input element 106, for example, a microphone, an audio output element 108, for example, a loudspeaker, and an audio coder-decoder (codec) 110.

Similarly, wireless accessory 200 includes a processor 202 and a memory 204 coupled to processor 202. Wireless accessory 200 may optionally include an audio input element 206, for example, a microphone, an audio output element 208, for example, a loudspeaker, and an audio codec 210.

Codec 110 (210) may be able to receive a digital representation 112 (212) of sound waves from processor 102 (202) and to output a corresponding analog signal 114 (214) to audio output device 108 (208). Audio output device 108 (208) may be able to receive analog signal 114 (214) and to output sound waves 116 (216) corresponding to analog signal 114 (214). In addition, audio input element 106 (206) may be able to receive sound waves 118 (218) and to output a corresponding analog signal 120 (220) to codec 110 (210). Codec 110 (210) may be able to receive analog signal 120 (220) and to output a digital representation 122 (222) of analog signal 120 (220) to processor 102 (202).

Handheld device 100 includes a display 124 and a keyboard 126, both coupled to processor 102, and may include additional user interface elements that are not shown in figures 1 and 2. Keyboard 126 may be embedded in full or in part within display 124, i.e. display 124 may be a "touch screen".

Wireless accessory 200 includes a display 224, coupled to processor 202, and one or more user input components 226, coupled to processor 202. Any of user input components 226 may be embedded within display 224, i.e. display 224 may be a "touch screen". Wireless accessory 200 may include additional user interface elements that are not shown in figures 1 and 3.

Handheld device 100 includes a communication interface 128. Communication interface 128 may be coupled to processor 102 and includes at least a radio 130 and an antenna 132. Similarly, wireless accessory 200 includes a communication interface 228. Communication interface 228 may be coupled to processor 202 and includes at least a radio 230 and an antenna 232. Communication interfaces 128 and 228 are compatible with a common wireless communication standard. By way of communication interfaces 128 and 228, handheld device 100 and wireless accessory 200, respectively, may be able to communicate with one another over a wireless communication link 11.

For example, handheld device 100 and wireless accessory 200 may both be "Bluetooth®-enabled", and communication interfaces 128 and 228 may comply with Bluetooth® core specifications v1.1, published February 22, 2001 by the Bluetooth® special interest group (SIG) and/or with Bluetooth® core specifications v1.2, published November 5, 2003. However, it will be obvious to those of ordinary skill in the art how to modify the following for other existing Bluetooth® standards or future related standards. Alternatively, communication interfaces 128 and 228 may comply with any other suitable wireless communication standard, for example Zigbee™ or ultra wideband.

Handheld device 100 may include a wireless communication interface 134, compatible with a wireless communication standard that is different from the wireless communication standard that communication interface 128 is compatible with. Wireless communication interface 134 may be coupled to processor 102 and includes at least a radio 136 and an antenna 138.

By way of wireless communication interface 134 and a communication infrastructure (not shown) that is external to handheld device 100, handheld device 100 may be able to establish telephone communication sessions with other devices (not shown). A user may initiate a telephone communication session to another entity, e.g. a person or a company, by, for example, typing on keyboard 126 a telephone number of a communication device that is associated with the other entity.

In another example, a user may initiate a telephone communication session to another entity by selecting the entity, or a telephone number of a communication device that is associated with the entity, from one or more databases 140 that are stored in memory 104. Handheld device 100 may dial the selected telephone number, and the entity may or may not receive the telephone communication session.

Alternatively, a communication device (not shown) that is associated with another entity may initiate a telephone communication session to handheld device 100. Handheld device 100 may receive a notification about the initiated telephone communication session from a communication infrastructure (not shown) that is external to handheld device 100. Handheld device 100 may notify the user about the incoming telephone communication session, and the user may or may not receive the telephone communication session.

By way of wireless communication interface 134 and a communication infrastructure (not shown) that is external to handheld device 100, handheld device 100 may be able to establish data communication sessions with other devices (not shown). Data communication sessions may include data in the form of plain text, data files, voice files, image files, movie files, streaming audio, streaming video, animation, or any other suitable data form.

For example, to initiate a data communication session to another entity, a user may begin by typing a message on keyboard 126 and typing an address of a communication device that is associated with the other entity. In another example, instead of typing an address of a communication device, a user may select the entity, or an address of a communication device that is associated with the entity, from one or more of databases 140. Handheld device 100 may transmit the message along with the address, and the external communication infrastructure may direct the message to its destination.

Alternatively, by way of a communication infrastructure (not shown) that is external to handheld device 100, a communication device (not shown) that is associated with another entity may transmit a message along with an address identifying handheld device 100.

A non-exhaustive list of examples for data communication sessions includes sending and receiving electronic mail (Email), sending and receiving instant messages, sending and receiving paging messages, sending and receiving short message service (SMS) messages, and any other suitable data communication sessions.

For data communications supported by handheld device 100, memory 104 may store respective software modules to be executed by processor 102, for example, an Email software module 142, an SMS software module 144, a paging software module 146 and an instant messaging software module 148.

Memory 104 may store application modules, for example, an "address book" application module 150, a "calendar" application module 152, and an "audio player" application module 154.

Address book application module 150 may, for example, manage one of databases 140 having entries 156 that include information related to entities. A non-exhaustive list of examples for information to be stored in records 156 includes the names of people and companies, telephone numbers, Email addresses, SMS addresses, instant messaging addresses, instant messaging nicknames, and any other suitable information related to entities.

Calendar application module 152 may, for example, manage another of databases 140 and may use records 158 that include information related to calendar events. A non-exhaustive list of examples for such calendar events includes meetings, appointments, holidays, and any other suitable calendar events. Records 158 may include information related to the calendar events, for example, dates, hours, durations, locations and identities of entities involved in the calendar events.

Audio player application module 154 may, for example, manage another of databases 140 storing audio files 160, for example MP3 files. Audio player application module 154 may control audio codec 110 to cause audio output element 108 to output sound waves 116 corresponding to selected ones of audio files 160.

Wireless accessory 200 provides a user with functionality that may be a substitute for some of the functionality provided by handheld device 100. For example, a user may choose to use audio input element 106 and audio output element 108 during a telephone communication, or may alternatively choose to use audio input element 206 and audio output element 208. In another example, a user may choose to listen to a playback of an audio file through audio output element 108 or alternatively through audio output element 208. In yet another example, a user may look at display 124 or display 224 for displayed information.

According to some embodiments of the inventions, by activating one or more of user input elements 226, a user may be able to selectively fetch information from handheld device 100 to be displayed on display 224. For at least that purpose, memory 104 may store executable code 162, and memory 204 may store executable code 262.

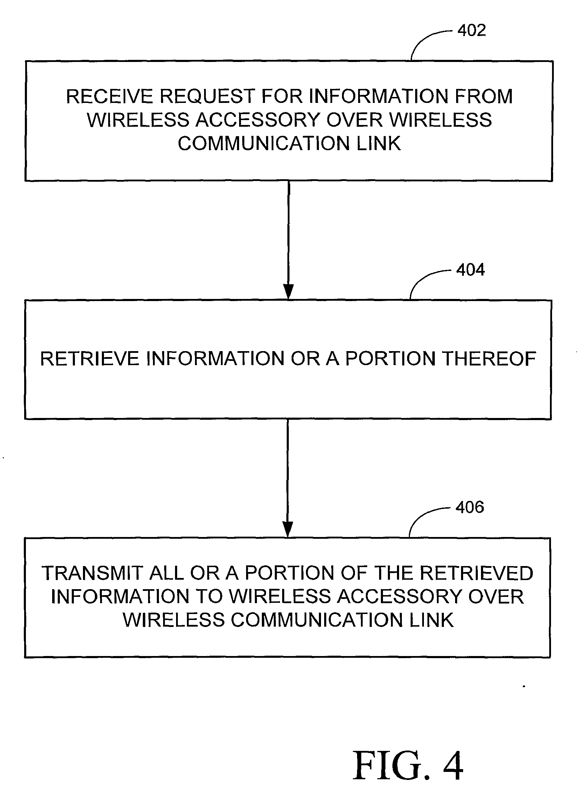

Reference is made additionally to figure 4, which is a flowchart of an exemplary method to be implemented in a handheld device, according to some embodiments of the invention. Executable code 162, when executed by processor 102, may implement the method of figure 4.

Executable code 262, when executed by processor 202, may be able to interpret activations of one or more of user input components 226 by a user and to controls wireless communication interface 228 to transmit to handheld device 100 a request for information in accordance with the user input. Executable code 262, when executed by processor 202, may be able receive the information, in full or in part, from handheld device 100 by way of wireless communication interface 228, and to display the received information, in full or in part, on display 224.

Executable code 162, when executed by processor 102, may receive a request for information at 402, the request originating from wireless accessory 200, retrieve the information or a portion thereof at 404, and control wireless communication interface 128 to transmit all or part of the information or the portion thereof to wireless accessory 200 at 406.

The following is a non-exhaustive list of examples for information to be requested by wireless accessory 200 from handheld device 100. Some of the examples use arbitrarily selected sequences of events to demonstrate exemplary usage of the information.

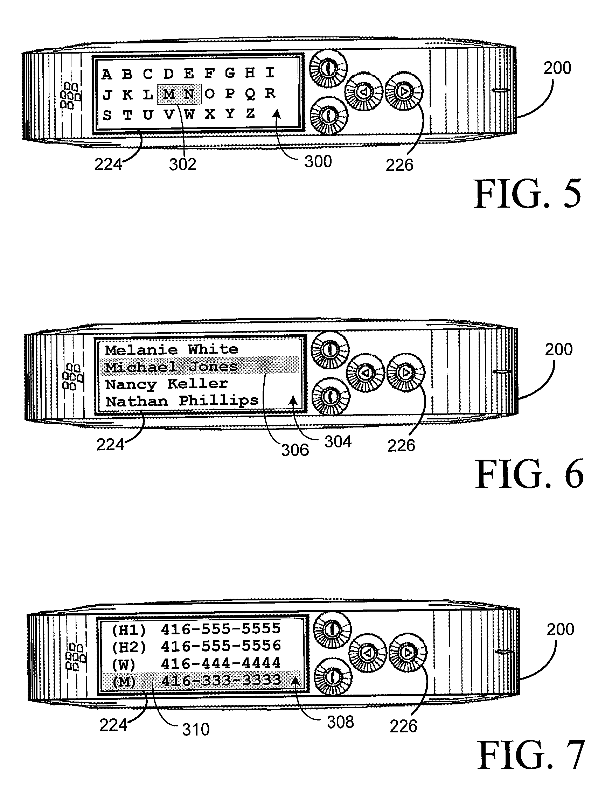

(1) Information about entities having names starting with any letter from a group of one or more letters. In an exemplary situation, a user may wish to place a telephone call from wireless accessory 200. The user may activate one or more of user input components 226 to display a screen 300 on display 254, as shown in figure 5. The user may activate one or more of user input components 226 to select a particular group of letters, for example, "M" and "N", as shown by a gray rectangle 302. According to predefined or user-programmable rules, wireless accessory 200 may request from handheld device 100 information about entities in the address book that have a first name starting with "M" or "N". The information, if received from handheld device 100, may be displayed, in full or in part in a screen 304, as shown in figure 6.

(2) Information about a particular entity in an address book. Once screen 304 is shown on display 224, the user may activate one or more of user input components 226 to select one of the entities, as shown by a gray rectangle 306. According to predefined or user-programmable rules, wireless accessory 200 may request from handheld device 100 information about the selected entity. The information, if received from handheld device 100, may be displayed, in full or in part in a screen 308, as shown in figure 7. In that example, screen 308 shows four different telephone numbers associated with "Michael Jones". The user may activate one or more of user input components 226 to select, for example, a mobile telephone number, as shown by a gray rectangle 310, and may initiate a telephone communication session to that number.

(3) Information about an entity frequently searched for in an address book. A user may activate one or more of user input components 226 so that wireless accessory 200 requests from handheld device 100 information about the entity that was most frequently searched for in the address book.

(4) Information about a predefined list of entities from an address book. Address book application 150 may be able to mark specific entries 156, selected by a user, as belonging to a "Quick dialing list". A user may activate one or more of user input components 226 so that wireless accessory 200 requests the quick dialing list from handheld device 100 and upon receipt thereof, displays the list, in full or in part, on display 224.

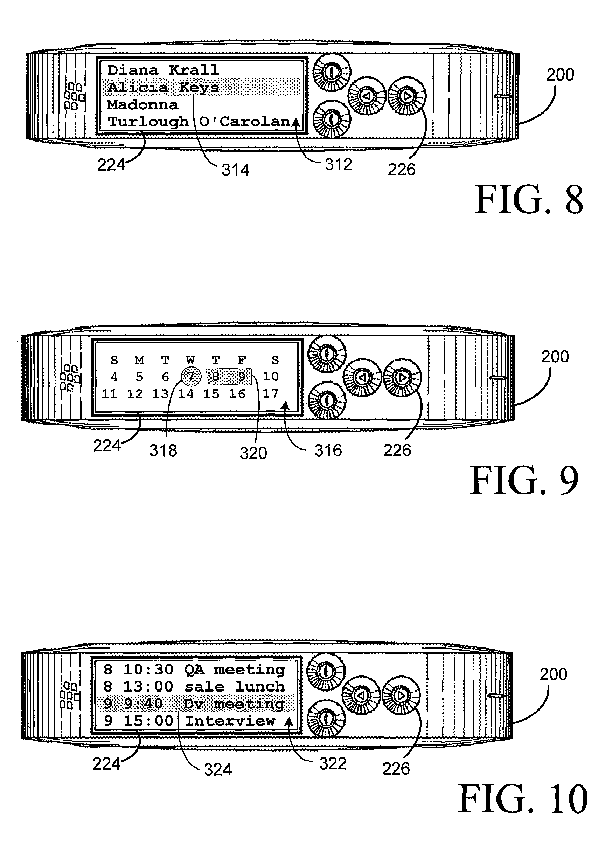

(5) Information about audio files. A user may activate one or more of user input components 226 so that wireless accessory 200 requests from handheld device 100 identifying labels of audio files 160. According to predefined or user-programmable rules, wireless accessory 200 may request the information from handheld device 100. The information, if received from handheld device 100, may be displayed, in full or in part in a screen 312. For example, as shown in figure 8, screen 312 shows names of artists that are associated with some of audio files 160. As shown by a gray rectangle 314, the user may select the artist "Alicia Keys" and in response, audio player application 154 may start playing audio files 160 that are associated with Alicia Keys.

(6) Information about calendar events that occur in a particular range of dates, and about entities associated with calendar events that occur in a particular range of dates. In an exemplary situation, a user may wish to view appointments for the next two days on display 224. The user may activate user input components 226 to display an exemplary screen 316 on display 224, as shown in figure 9. Screen 316 shows the current date (Wednesday, the 7^{th} of the month), marked by a gray disk 318, and several dates before and after the current date. The user may activate one or more of user input components 226 to select the two days following the current date, as shown by a gray rectangle 320.

According to predefined or user-programmable rules, wireless accessory 200 may request handheld device 100 for information stored in records 158 about calendar events that occur in the selected days. The information, if received from handheld device 100, may be displayed, in full or in part in an exemplary screen 322, as shown in figure 10. For the next day (Thursday, the 8^{th} of the month), screen 322 shows a meeting with the quality control team at 10:30, and a lunch meeting with the sales manager at 13:00. For the following day (Friday, the 9^{th} of the month), screen 322 shows a meeting with the development team at 9:40, and an interview at 15:00.

Alternatively, according to predefined or user programmable rules, wireless accessory 200 may request from handheld device 100 information stored in records 158 about entities associated with calendar events that occur in the selected days. The information, if received from handheld device 100, may be displayed, in full or in part in a screen similar to screen 306 of figure 6.

(7) Information about a particular calendar event and about entities associated with a particular calendar event. With screen 322 displayed on display 224, the user may wish to view information about the meeting with the development team. The user may activate one or more of user input components 226 to select that meeting, as shown by a gray rectangle 324 in figure 10. According to predefined or user-programmable rules, wireless accessory 200 may request from handheld device 100 information about the selected calendar event. The information, if received from handheld device 100, may be displayed, in full or in part in another screen. For example, the requested information may be a list of participants in the meeting and may displayed in a screen similar to screen 306 of figure 6. In another example, the requested information may be detailed information about the particular calendar event, for example, duration, agenda, location, and any other relevant type of information.

(8) Information about entities that were recently involved in telephone (data) communication sessions with handheld device 100. A user may activate one or more of user input components 226 so that wireless accessory 200 may request from handheld device 100 information about entities that were recently involved in telephone (data) communication sessions with handheld device 100. According to predefined or user-programmable rules, wireless accessory 200 may request the information from handheld device 100. The information, if received from handheld device 100, may be displayed, in full or in part in a screen similar to screen 306 of figure 6.

Identifiers of entities, as may appear in lists 304, 308, 312 and other screens on display 224 may be, for example, retrieved from entries 156, and may be names of persons, names of companies, Email addresses, instant messaging addresses, instant messaging nicknames, and any other suitable information related to entities. If an entity is not included in entries 156, an address, a telephone number or an identifying name attached to a communication session may be used as an identifier on display 224.

A non-exhaustive list of examples for standards with which wireless communication interface 134 may comply includes Direct Sequence - Code Division Multiple Access (DS-CDMA) cellular radiotelephone communication, Global System for Mobile Communications (GSM) cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM Evolution (EDGE), 3G and 4G communication.

Alternatively, handheld device 100 may be "802.11-enabled", and wireless communication interface 134 may comply with one or more of the following standards defined by the Institute of Electrical and Electronic Engineers (IEEE) for Wireless LAN MAC and Physical layer (PHY) specifications:

| Standard | Published | Maximum Speed | Frequency | Modulation |
|---|---|---|---|---|
| 802.11 | 1997 | 2 Mbps | 2.4 GHz | Phase-Shift |
| 802.11a | 1999 | 54 Mbps | 5.0 GHz | Orthogonal Frequency Division Multiplexing |
| 802.11b | 1999 | 11 Mbps | 2.4 GHz | Complementary Code Keying |
| 802.11g | 2003 | 54 Mbps | 2.4 GHz | Orthogonal Frequency Division Multiplexing |

However, it will be obvious to those of ordinary skill in the art how to modify the following for other existing WLAN standards or future related standards, including 802.11n.

A non-exhaustive list of examples for processors 102 and 202 includes microprocessors, microcontrollers, central processing units (CPU), digital signal processors (DSP), reduced instruction set computers (RISC), complex instruction set computers (CISC) and the like. Furthermore, any of processors 102 and 202 may comprise more than one processing unit, may be part of an application specific integrated circuit (ASIC) or may be a part of an application specific standard product (ASSP).

A non-exhaustive list of examples for memories 104 and 204 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

A non-exhaustive list of examples for antennae 132, 138 and 232 includes dipole antennae, monopole antennae, multilayer ceramic antennae, planar inverted-F antennae, loop antennae, shot antennae, dual antennae, omnidirectional antennae and any other suitable antennae.
While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the spirit of the invention.

## Claims

1. A method in a handheld device (100) for communicating with a wireless accessory (200) of said handheld device (100), the method comprising:
receiving a request for information from said wireless accessory (200) over a wireless communication link (11);
retrieving said information or a portion thereof; and
transmitting said information or said portion thereof via said wireless communication link (11) to said wireless accessory (200).

2. The method of claim 1, wherein retrieving said information or said portion thereof comprises:
searching entries (156) managed by an address book application module (150), and/or
searching audio files (160) managed by an audio player application module (154), and/or
searching records (158) related to calendar events managed by a calendar application module (152).

3. The method of claim 1 or claim 2, wherein retrieving said information or said portion thereof comprises:
obtaining details about one or more entities that were recently involved in telephone and/or data communication sessions involving said handheld device (100).

4. The method of any one of claims 1 to 3, wherein retrieving said information or said portion thereof comprises:
retrieving one or more identifiers of an entity, said one or more identifiers comprising any one or more of a name of a person, a name of a company, an e-mail address, an instant messaging name and/or a telephone number.

5. The method of any one of claims 1 to 4, wherein receiving said request and transmitting said information or said portion thereof via said wireless communication link (11) comprises:
communicating according to a Bluetooth®, ZigBee™ or ultra wideband standard.

6. A handheld device (100) comprising:
a processor (102);
a first wireless communication interface (128), compatible with a first wireless communication standard, through which said handheld device (100) is able to communicate with a wireless accessory (200), and through which said handheld device (100) is able to receive from said wireless accessory (200) a request for information; and
a memory (104) able to store executable code means (162) which, when executed by said processor (102), retrieves said information or a portion thereof and controls said first wireless communication interface (128) to transmit said information or said portion thereof to said wireless accessory (200).

7. The handheld device (100) of claim 6, wherein said memory (102) is able to store one or more databases (140) that comprise
entries (156) managed by an address book application module (150), and/or
audio files (160) managed by an audio player application module (154), and/or
records (158) related to calendar events managed by a calendar application module (152).

8. The handheld device (100) of claim 6 or claim 7, wherein said information comprises one or more identifiers of an entity, said one or more identifiers comprising any one or more of a name of a person, a name of a company, an e-mail address, an instant messaging name and/or a telephone number.

9. The handheld device (100) of any one of claims 6 to 8, further comprising:
a second wireless communication interface (134), compatible with a second, different, wireless communication standard, through which said handheld device (100) is able to be involved in telephone communication sessions and/or data communication sessions,
wherein said request is for entities with which said handheld device (100) was recently involved in said telephone communication sessions and/or said data communication sessions.

10. The handheld device (100) of claim 9, wherein said second wireless communication standard is global system for mobile communications (GSM), code division multiple access (CDMA) or 802.11.

11. The handheld device (100) of any one of claims 6 to 10, wherein said first wireless communication standard is Bluetooth®, ZigBee™ or ultra wideband.

12. A wireless communication system (10) comprising:
a handheld device (100); and
a wireless accessory (200) of said handheld device (100), said wireless accessory (200) having a display (224) and one or more input components (226),
wherein said handheld device (100) comprises:
a processor (102);
a first wireless communication interface (128), compatible with a first wireless communication standard, through which said handheld device (100) is able to communicate with said wireless accessory (200), and through which said handheld device (100) is able to receive from said wireless accessory (200) a request for information; and
a memory (104) able to store executable code means (162) which, when executed by said processor (102), retrieves said information or a portion thereof and controls said first wireless communication interface (128) to transmit said information or said portion thereof to said wireless accessory (200).

13. The wireless communication system (10) of claim 12, wherein said wireless accessory (200) is arranged to display on said display (224) all or a part of said transmitted information or said portion thereof.

14. A computer program product for a handheld device (100) for enabling the handheld device (100) to communicate with a wireless accessory (200) of said handheld device (100), the computer program product comprising a computer readable medium (104) embodying program code means executable by a processor (102) of the handheld device (100) for implementing the method of any one of claims 1 to 5.

15. A communications infrastructure comprising at least one handheld device (100) according to any one of claims 6 to 10 and/or at least one wireless communication system (10) according to claim 12 or claim 13.

## Amended claims

### Amended claims in accordance with Rule 86(2) EPC.

**1.** A method for communications between a handheld device (100) and its wireless handset/headset (200), the method comprising:
transmitting a request for information from said handset/headset (200) over a wireless communication link (11) to said handheld device (100);
receiving said information or a portion thereof via said wireless communication link (11); and
displaying said information or said portion thereof on a display (224) of said handset/headset (200),
wherein said handheld device (100) has telephone functionality, a user is able, via said handset/headset (200), to provide audio input to and to receive audio output from said handheld device (100) as part of said telephone functionality.

**2.** The method of claim 1, wherein said request is for:
one or more entries (156) managed by an address book application module (150) in said device (100), and/or
identifiers of one or more audio files (160) managed by an audio player application module (154) in said device (100), and/or
one or more records (158) related to calendar events managed by a calendar application module (152) in said device (100), and/or
details about one or more entities that were recently involved in telephone and/or data communication sessions involving said device (100) and/or
one or more identifiers of an entity, said one or more identifiers comprising any one or more of a name of a person, a name of a company, an e-mail address, an instant messaging name and/or a telephone number.

**3.** The method of claim 1 or claim 2, wherein displaying said information or said portion thereof on said display (224) comprises:
displaying said information or said portion thereof as text on said display (224).

**4.** The method of any one of claims 1 to 3, wherein transmitting said request and receiving said information or said portion thereof via said wireless communication link (11) comprises:
communicating according to a Bluetooth®, ZigBee™ or ultra wideband standard.

**5.** A wireless handset/headset (200) for communicating with a handheld device (100) having telephone functionality, said handset/headset (200) comprising:
an audio input element (206) through which a user is able to provide audio input to said handheld device (100) as part of said telephone functionality;
an audio output element (208) through which a user is able to receive audio output from said handheld device (100) as part of said telephone functionality;
a wireless communication interface (228), compatible with a wireless communication standard, through which said handset/headset (200) is able to communicate with a wireless accessory (200), and through which said handheld device (100);
a display (224);
a processor (202) coupled to said audio input element (206), said audio output element (208), said interface (228) and said display (224); and
a memory (204) able to store executable code means (262) which, when executed by said processor (202), is arranged to control said interface (228) to transmit a request for information to said handheld device (100) and to display said information or a portion thereof on said display (224) if said interface (228) receives said information or said portion thereof from said handheld device (100).

**6.** The handset/headset (200) of claim 5, wherein said request is for
one or more entries (156) managed by an address book application module (150) in said handheld device (100), and/or
identifiers of one or more audio files (160) managed by an audio player application module (154) in said handheld device (100), and/or
one or more records (158) related to calendar events managed by a calendar application module (152) in said handheld device (100), and/or
details about one or more entities that were recently involved in telephone and/or data communication sessions involving said device (100) and/or
one or more identifiers of an entity, said one or more identifiers comprising any one or more of a name of a person, a name of a company, an e-mail address, an instant messaging name and/or a telephone number.

**7.** The handset/headset (200) of claim 5 or 6, wherein said standard is a Bluetooth®, ZigBee™ or ultra wideband standard.

**8.** A wireless communication system (10) comprising:
the wireless handset/headset (200) of any one of claims 5 to 7; and
a handheld device (100) having telephone functionality and that is able to communicate wirelessly with said handset/headset (200).

**9.** A computer program product for a wireless handset/headset (200) for enabling the handset/headset (200) to communicate with a handheld device (100) having telephone functionality, the computer program product comprising a computer readable medium (204) embodying program code means executable by a processor (202) of the handset/headset (200) for implementing the method of any one of claims 1 to 4.
